# EUROPEAN PATENT SPECIFICATION

(11) **EP 2 222 173 B1**
(45) Date of publication and mention of the grant of the patent: **01.08.2012**
(21) Application number: 08857911.5
(22) Date of filing: 03.12.2008
(51) Int. Cl.: A23C 9/13, A23C 9/14

(54) **DAIRY PRODUCT AND PROCESS**
MILCHPRODUKT UND VERFAHREN
PRODUIT LAITIER ET PROCÉDÉ ASSOCIÉ

(30) Priority: 03.12.2007 NZ 56396207
(43) Date of publication of application: 01.09.2010
(73) Proprietor: Fonterra Co-Operative Group Limited, Auckland (NZ)
(72) Inventor: HARNETT, Michelle, Palmerston North (NZ); WILES, Peter Gilbert, Palmerston North (NZ); SAMAL, Prabandha Kumar Gajendranath, Palmerston North (NZ)
(74) Representative: Walker, Ross Thomson
(86) International application number: PCT/NZ2008/000324
(87) International publication number: WO 2009/072904

(56) References cited:
- EP-A1- 1 249 179
- EP-A2- 1 124 440
- WO-A1-02/43503
- WO-A1-2007/026053
- US-A- 5 576 040
- US-A- 5 766 330
- PATENT ABSTRACTS OF JAPAN & JP 2000 197468 A (SNOW BRAND ROLLY CO LTD) 18 July 2000

## Description

### Technical field

The invention relates to a yoghurt and a method for preparing a yoghurt.

### Background to invention

Yoghurt is a traditional product consumed widely since ancient times, but is now very popular as a snacking food (or beverage) and is often used as a tasty topping as part of a dessert or breakfast cereal dish. Some people do not tolerate well consuming fresh milk but find that they can digest yoghurt readily. Yoghurt has been attributed with a variety of healthful properties. Apart from the benefits of an easily digested quantity of high quality protein and the benefits attributed to the consumption of large numbers of lactic acid producing micro-organisms (and the products of their metabolism), yoghurt (along with many dairy products) is an important source of calcium in the human diet.

The texture of yoghurt can be manipulated using a variety of methods. Known methods include increasing the milk protein (solids) concentration, adding gelatine or polysaccharides (gums or starch), adding whey proteins, adding caseinates, especially sodium caseinate etc.

The use of sodium caseinate in yoghurt is part of a more general art of manipulating the cations present to improve its texture. Manner et al. (WO2007/026053) disclose the preparation of as yoghurt type of product where a portion of the calcium was replaced with sodium or potassium ions (using weak ion exchange).

Modler et al. (Journal of Dairy Science [1983] 66, 422-429) disclose that the addition of sodium caseinate to yoghurt improves texture and reduces syneresis. Johnston & Murphy (Journal of Dairy Research [1992] 59, 197-208) examined the texture of acid dairy gels when various anions were added. Some of these anions are known to sequester calcium. All the added anions were as sodium salts. Some anions increased gel strength, while others did not.

Much art discloses the addition of a variety of calcium salts and minerals as a fortificant in yoghurt. Nagai & Ogawa (JP2006238868) teach the use of an alkaline calcium salt (calcium hydroxide) to reduce the acidity of foodstuffs, including yoghurt. Goodner (US20060073237) discloses the use of calcium malate in yoghurt. Bouman et al. (US20050153021) disclose the use of the complex salt calcium (lactate) gluconate citrate. Kubota et al (WO2004039178) disclose the fortification of yoghurt with calcium carbonate as well as calcium phosphate and ferric salts. Clark & Clark (US20030228347) disclose the fortification of foodstuffs, including milk-based beverages and yoghurts, with calcium picolinate. Yang et al. (US20010051197) disclose the use of calcium citrate malate to fortify yoghurt.

Carr, Munro & Campanella (International Dairy Journal, 12, 487-492 [2002]) found that CaCl₂ when added to a solution of sodium caseinate increased its viscosity up to a certain point but continued doses caused a decline in viscosity.

Fleury et al. in US5820903 disclose a means of preparing a calcium fortified yoghurt wherein finely ground calcium phosphate (tri-calcium phosphate [TCP]) is mixed into a yoghurt post fermentation. Murphy et al. (US20020068112) disclose a method of making yoghurt wherein calcium phosphate with a mean particle size <6µm is added preferably to the initial milk stream as a calcium fortifier. Other sources of particulate calcium added to foodstuffs that are known include ground eggshell, limestone and dolomite. Park in US4784871 discloses that the TCP is soluble in acid conditions and may be used to fortify a fruit flavoured yoghurt preparation.

Hansen & Fligner (US5449523) disclose a method for preparing a calcium fortified yoghurt involving the addition of a calcium source and either a calcium sequestering agent or alkaline agent, or a mixture of both. The additives are incorporated (in no particular order) prior to the heat treatment step to ensure that the calcium fortified product is stable. Hojo, Kubota & Morisaki (WO2004010795) disclose a means of preparing a calcium fortified food product that includes a hardly-soluble calcium component (calcium carbonate, calcium phosphate, or dolomite) and a chelating agent (malate, succinate, a tartrate, glutamate, an EDTA salt, gluconate, and citrate). Preferred particle size is <0.8µm.

Calcium plays an important part in human health, particularly in bone health. Yoghurt is marketed with nutritional claims as permitted by the food labelling laws particular to a jurisdiction. Often a yoghurt serving is promoted as being a 'good source of calcium'.

The food labelling regulations in the United States of America allow comparative statements in precisely prescribed circumstances. 'The terms "high", "rich in", or "excellent source of' may be used on the label provided the food contains 20 percent or more of the RDI (recommended daily intake) or the DRV (daily recommended value) per reference amount customarily consumed' (21CFR [Code of Federal Regulations] section 101.54 'Nutrient content claims for "good source", "high", "more", and "high potency"'). For the 2000 Calorie standard USA diet, the RDI for calcium is 1000mg per day. The reference amount for yogurt (yoghurt) is specified in the USA as 225g (21 CFR 101.12, 'Reference amounts customarily consumed per eating occasion').

In Australasia, different food labelling regulations apply. The recommended daily intake for calcium is set at 800mg (Schedule of Standard 1.1.1, Food Standards Code, Food Standards Australia New Zealand) and the reference quantity for yoghurt is 150g (Standard 1.3.2, Table to clause 3, Food Standards Code, Food Standards Australia New Zealand). `A claim to the effect that a food is a good source of a vitamin or mineral may be made if a reference quantity of the food contains no less than 25% of the RDI ...' (section 7 of Standard 1.3.2, Food Standards Code, Food Standards Australia New Zealand). Thus in Australasia, to be able to use the term "good source" of calcium, a serving of yoghurt would have to contain 200mg calcium per 150g of serving.

A process that removes calcium from yoghurt makes it more difficult to make a legal nutrition claim for calcium on the food label - a product that consumers traditionally expect to be rich in calcium. Alternatively, sequestered calcium may not be readily absorbed or be nutritionally available despite being declared on the nutrition label.

It is an object of the invention to provide a method for preparing a yoghurt or yoghurt drink having increased gel strength or viscosity that is also a good source of calcium.

### Disclosure of invention

The applicants have found surprisingly that the reincorporation of calcium into an otherwise calcium depleted yoghurt is found to result in an increase in texture in the yoghurt that is additional to the texture that could have been achieved by preparing it using regular calcium containing milk and retains the increase in texture obtained by using calcium depleted milk or increases it. The yoghurt is also found to have good organoleptic qualities.

In one aspect the invention provides a method for preparing a yoghurt or a yoghurt drink, comprising:
(a) providing a casein source that has been treated to remove a proportion of its divalent cations including at least a proportion of its calcium cations;
(b) mixing the calcium-depleted casein source with one or more other ingredients to form a yoghurt milk, if required;
(c) dispersing a substantially insoluble calcium source in the yoghurt milk;
(d) heat treating the yoghurt milk;
(e) acidifying the mixture to a pH that causes gelling of the yoghurt milk,
wherein step (c) is carried out at any time before gelling for set yoghurt and stirred yoghurt and at any time before the final packaging of drinking yoghurts.

Preferably, step (c) is carried out before the acidifying step.

The casein source that has been treated to remove a proportion of its divalent ions may itself be the yoghurt milk. Liquid calcium-depleted milk or liquid calcium-depleted skim milk and milk protein concentrates prepared from these are examples of such casein sources. Alternatively, the yoghurt milk may be prepared by adding other ingredients to a liquid calcium-depleted source, for example, by adding fat and whey protein to form the yoghurt milk.

Alternatively, the calcium-depleted casein source may be added to a liquid dairy composition comprising casein; such as milk or skim milk, so as to reduce the calcium to casein ratio.

In another alternative the yoghurt milk is prepared from a mixture of ingredients including, for example, ingredients chosen from a powdered calcium-depleted casein source, a powdered casein source, water, fat and whey proteins. Another ingredient that may be alternatively used in the mixture is a calcium-depleted casein source liquid concentrate.

A "yoghurt milk" is a liquid milk-based starting material for the preparation of yoghurt or a yoghurt drink. The yoghurt milk comprises casein and whey proteins in the weight ratios between 90:10 casein:whey protein to 20:80, preferably 90:10 to 50:50.

Yoghurt milks are converted to yoghurt or yoghurt drinks by acidification, usually using a bacterial culture.

A "yoghurt" (yogurt) is an acidic or fermented food prepared from a dairy source and viable food approved micro-organisms. Yoghurt possesses gel-like textural attributes. For the purposes of this invention, yoghurt also refers to yoghurt-like products that may include non-dairy derived lipids, flavourings and food-approved stabilisers, acids, plant derived additions and texturizers. Heat treated yoghurt and yoghurt-like products are also included by the term yoghurt. Petit Suisse is also contemplated when referring to yoghurt. Preferably, the yoghurt is a fermented food prepared from a dairy source and viable food approved micro-organisms.

A "yoghurt drink" is an acidic or fermented food prepared from a dairy source and viable micro-organisms. Yoghurt drink possesses viscous, cream-like textural attributes and is widely known as drinking yoghurt. For the purposes of this invention yoghurt drinks also refer to yoghurt-like drinkable products that may include non-dairy derived lipids, flavourings and food-approved stabilisers, acids and texturizers. Heat treated drinking yoghurt products are also included by the term drinking yoghurt. Generally drinking yoghurts have a lower protein content that regular yoghurts. More specifically, drinking yoghurts have protein contents generally <2.5% w/w and typically about 2.0% w/w protein or less. Preferably, the yoghurt drink is a fermented food prepared from a dairy source and viable micro-organisms.

It is contemplated that products falling under the scope of the Codex standard for fermented milks (CODEX Standard 243-2003, are included as either yoghurts or yoghurt drinks.

A "substantially insoluble calcium source" is a calcium source having a solubility when dissolved in (pure) water of less than 10g/L, preferably < 5g/L and more preferably <2g/L.

The term "milk protein concentrate" (MPC) refers to a milk protein product in which greater than 40%, preferably greater than 55%, most preferably 70% of the solids-not-fat (SNF) is milk protein (by weight on a moisture-free basis) and the weight ratio of casein to whey proteins is substantially the same as that of the milk from which it was prepared. Such concentrates are known in the art. MPCs are frequently described with the % dry matter as milk protein being appended to "MPC": For example MPC70 is an MPC with 70% of the dry matter as milk protein.

The term "calcium ions" is used broadly and includes ionic calcium and colloidal calcium unless the context requires otherwise.

The term "magnesium ions" is used broadly and includes ionic magnesium and colloidal magnesium unless the context requires otherwise.

"Calcium-depleted" ingredients are those in which the calcium content is lower than the corresponding non depleted ingredients. These products generally also have a lower content of divalent cations, for example, magnesium, than corresponding non-depleted products. Additionally, the monovalent ions will be different to that of starting milk.

The term "comprising" as used in this specification means 'consisting at least in part of, that is to say when interpreting statements in this specification and claims which include that term, the features, prefaced by that term in each statement, all need to be present but other features can also be present.

In any of the methods, a homogenising step may be carried out at any stage before or after the addition of the calcium source.

The casein source and the yoghurt milk may be prepared from the milk of any lactating animal but the milk of cows, sheep and goats is preferred. The casein source and the yoghurt milk may be prepared from dried milk powders or concentrates.

Any combination of fresh milk or reconstituted milk can be used to prepare the casein source and the yoghurt milk. The protein concentration in the yoghurt milk may be adjusted by any suitable means. For instance where a protein concentration less than about 3.0% to 4.0% w/w is required (for instance for the production of drinking yoghurt) a diluent may be added, for example, water, whey or permeate. Where a protein concentration higher than about 3.0% to 4.0% w/w is required, the casein source or the yoghurt milk or both may be concentrated by any suitable means. Preferred methods of concentration are ultrafiltration or by the addition of milk powder or retentate powder, e.g., milk protein concentrate.

In a preferred embodiment, a calcium depleted casein source in powder form is mixed with other ingredients. In this embodiment the powder is a modified powder where a proportion of the calcium and magnesium ions have been replaced with sodium or potassium ions. The calcium depleted casein source may be prepared by combining a dairy stream highly depleted in divalent cations with an untreated dairy stream to provide a yoghurt milk at least 10% depleted in divalent cations.

In this specification, divalent cations refer to the elements calcium and magnesium. References to depletion of calcium also generally imply depletion of magnesium.

The term monovalent cations refers principally to sodium and potassium, but may also include ammonium and hydrogen.

In a preferred embodiment, all or part of the casein source is treated to replace a proportion of the divalent cations with monovalent cations. The calcium-depleted casein source may be a calcium-depleted milk, calcium-depleted skim milk, calcium-depleted milk protein concentrate, or a sodium caseinate.

Such calcium-depleted dairy ingredients may be prepared by known methods. These methods include those disclosed in published PCT applications WO01/41579 and WO01/41578, and US Patent Applications 2003/0096036 and 2004/0197440. Currently preferred are ingredients prepared by removal of calcium using cation exchange chromatography, preferably on a resin bearing strongly acidic groups (in the sodium or potassium form). Preferably, the pH of the milk material subjected to calcium depletion is adjusted to have a pH in the range 6.0-6.5 prior to ion exchange treatment. Preferably, the pH is adjusted if necessary to 6.3-6.9 after ion exchange treatment. Any food approved acidulant may be used, but lactic acid and sources of lactic acid or citric are preferred. The calcium-depleted product may be used as a liquid ingredient or dried to produce a dried ingredient. The extent of calcium depletion may be varied by altering the chromatography conditions, by varying the nature and volume of the resin, the nature and amount of milk material, the space velocity (ratio of volume flow rate to resin bed volume), the blending of treated milk with untreated milk, the temperature, pH, and other processing variables.

A preferred level of calcium depletion in the yoghurt milk before addition of the substantially insoluble calcium source is between 10% to 50% and more preferably between 15% and 35%. Preferably, the calcium is substituted by monovalent cations. A preferred means of replacing the divalent cations is the use of ion exchange resins and a preferred ion exchange resin is a strong cation resin with active sulphonate groups such as Rohm & Haas IMAC HP111E. The art of treating dairy streams with suitable ion exchange resins is disclosed in WO01/41579, WO01/41578 and US Patent Applications 2003/0096036 and 2004/0197440.

Where the calcium-depleted casein source is the main or sole constituent of the yoghurt milk, the calcium-depleted milk will generally have essentially the same extent of calcium depletion as the yoghurt milk. Where the calcium-depleted casein source is mixed with one or more other ingredients that comprise casein without calcium depletion, the extent of calcium depletion of the casein-depleted material is generally greater, so that the yoghurt milk prepared has one of the preferred ranges of calcium depletion. The extent of depletion will depend on the proportions of the ingredients, and calcium-depletion of over 90% will be generally used if the calcium-depleted casein source provides less than 20% of the casein of the yoghurt milk.

In one embodiment, the yoghurt milk before additional insoluble calcium addition has its calcium content reduced to 300-900 mg/kg. The optimum calcium concentration varies according to the casein concentration in the yoghurt. A concentration in the range of 500-900 mg/kg is most appropriate for a yoghurt having a protein concentration of 2.9% with a casein to whey ratio substantially that of milk.

For yoghurts with higher casein contents, higher levels of calcium are also useful. For example, a yoghurt having a protein concentration of 4.1 % where the casein to whey ratio is substantially that of milk, the range may be extended from 500-900 mg/kg to 500-1300 mg/kg.

Preferably, the calcium to protein weight ratio is in the range 0.015-0.030, preferably 0.020-0.030.

Calcium may be added using any edible source rich in calcium that is substantially insoluble as defined above. Preferred calcium salts are tri-calcium phosphate (TCP), calcium carbonate and calcium sulphate. The calcium salt may be added either before or after the heat treatment step (iii). Other calcium sources include various naturally occurring minerals, e.g., limestone, dolomite, coral, shell, aragonite and bone. A natural product rich in calcium phosphate is ALAMIN™ sold by Fonterra Co-operative Group Limited, Auckland. Gypsum is a further useful calcium source. Preferably the calcium ingredient is ground fine enough to pass a 400# sieve, more preferably at least 60% by weight, more preferably all of the ingredient is in the form of particles are less than 10 micrometres in nominal diameter. The nominal diameter of small particles may be determined using readily available instruments typically using optical scattering techniques. One such instrument suitable for the determination of particle sizes is a Mastersizer 2000 (Malvern Instruments Ltd., Malvern, Worcestershire, United Kingdom).

The amount of substantially insoluble calcium to be added varies according to the extent of calcium depletion and the desired calcium level in the yoghurt product. Generally, the amount is selected so that the level of calcium added is either at least 10% of the calcium in the yoghurt milk or is sufficient to bring the calcium concentration in the yoghurt milk up to the level of the corresponding yoghurt milk where the calcium-depleted casein source was not calcium-depleted. Heat treatment of the material to be fermented is preferred, prior to acidification. In addition to assisting with microbiological control, it causes denaturation of whey proteins and improves gel strength of the yoghurt. Preferably, the heat treatment is carried out 70-95°C. The preferred times vary according to the temperature. For temperatures of 80-85°C, typically used, 5-20 minutes is generally used.

Following heat treatment, the mixture is cooled. Conventional yoghurt manufacture procedures can be followed. Inoculation with yoghurt starters is well known to those skilled in the art. The method of the invention is applicable to the preparation of both stirred yoghurts and set yoghurts. The fermentation is carried out until the yoghurt has been formed. The fermentation may be allowed to proceed until a target pH, e.g., pH 4.5, has been reached.

Alternatively, acidification may be by chemical acidification, e.g., by adding glucono-delta-lactone.

### Brief description of the drawings

Figure 1 shows a schematic drawing of the process steps for production of set, stirred and drinking yoghurts.
Figure 2 shows the viscosities of stirred yoghurt samples.
Figure 3 shows the texture of set yoghurt samples.
Figure 4 shows texture results of yoghurts prepared with various calcium treatments.
Figure 5 shows the effect of fat on firmness.
Figure 6 shows the effect of fat on viscosity.

Error bars indicate ± cov. where the bar value is the average of 3 or more samples

### EXAMPLES

The following examples further illustrate the invention.

The Examples illustrate the effects of the addition of partially soluble sources of calcium, ALAMIN™ and TCP on yoghurt texture prepared using a calcium depleted yoghurt milk (dairy source).

### Background

The use of calcium depleted yoghurt milks result in lower calcium levels in the final product but enhanced textural properties. This is undesirable from a nutritional point of view.

### General Methods

### Yoghurt Preparation

Yoghurt milk bases were prepared by either combining fresh milk or recombined milk with a fat source such as cream or anhydrous milk fat (AMF) (if desired), dairy or other ingredients, and a calcium source, as required.

The yoghurt milk base was stirred for at least 30 min, then heated to 65°C and homogenised (two stage, 150/50 bar) followed by heating to 90°C for 10 min. After cooling to the desired fermentation temperature, the yogurt milk base was inoculated with an appropriate starter culture (see below). Yoghurt milk base for set yoghurts was filled into separate 125 ml cups and incubated until the target pH was reached. The yoghurt was then chilled to 5°C and held at the temperature. Yoghurt milk base for stirred yoghurt was incubated in bulk until the target pH was reached. The yoghurt was then cooled to about 20°C then passed through a back pressure valve at a pressure appropriate to give a smooth final product. The smoothed yoghurt was then packed into 125 mL cups and chilled to 5°C. Analyses were carried out after seven days storage at 5°C.

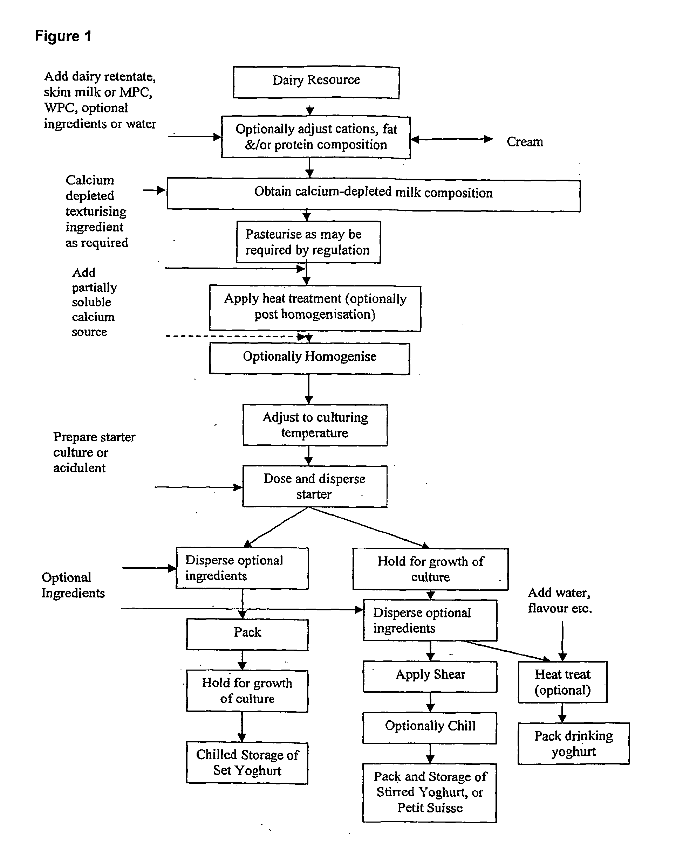

Figure 1 shows possible process steps for the production of three generic types of yoghurt - set, stirred and drinking yoghurts. The manufacture of Petit Suisse is similar to that of stirred yoghurt, with the differences noted above.

### Starter Cultures

Yoghurt starter culture MY 800, supplied by Danisco A/S, Langebrogade 1 DK-1001 Copenhagen, Denmark, was added at an addition rate of 0.002%

### Preparation of starter culture

The amount of freeze-dried starter necessary for inoculation was calculated as addition rate (e.g., 0.002% starter culture) x volume of milk per yoghurt sample (e.g., 10 L) x number of samples. The required amount of starter culture was weighed out and added to warm (40°C) skim milk (10 mL milk per yoghurt sample). The milk was agitated to disperse/dissolve the starter culture and held at 40°C for 30 minutes before inoculation.

### Materials

Low heat skim milk powder [SMP] (Fonterra Co-operative Group Limited, Auckland).

Functional skim milk powder (FSMP) (Fonterra Co-operative Group Limited, Auckland). Details of the preparation of specific samples of FSMP are detailed below and are coded as 1761 and 2108.

80% protein whey protein concentrate (WPC 392) (Fonterra Co-operative Group Limited, Auckland).

80% protein whey protein concentrate (WPC 132) (Fonterra Co-operative Group Limited, Auckland).

Sodium caseinate 180 (Fonterra Co-operative Group Limited, Auckland).

Anhydrous milk fat [AMF] (Fonterra Co-operative Group Limited, Auckland).

Lactose (lactose monohydrate) (Fonterra Co-operative Group Limited, Auckland)

ALAMIN™997 Fine #(50% < 5.3 µm, 90% < 11.5 µm & 100% < 22.4 µm and typically 69.4% w/w calcium phosphate) (Fonterra Co-operative Group, Limited, Auckland).

Tri-calcium phosphate (TCP) micro-fine powders (Tri-CAFOS MF), CFB Budenheim (median particle size 3.3 µm, 99.9% < 4.5 µm).

WPC 34 - prepared from cheese whey as follows. Fresh cheese whey was ultrafiltered to attain a protein to solids ratio of about 36% w/w. The retentate was concentrated by evaporation and spray dried using known art techniques to about 3.5% moisture.

### Calcium depleted fresh milks

Calcium depleted fresh milk samples were prepared using the general procedure given in Example 2 of WO01/41579. Details and slight modifications of the procedure are noted below. Clean and regenerated ion exchange resin in the sodium form (Amberlite SR1L-Rohm&Haas) was added with stirring to chilled Anchor Trim milk (pH 6.7, 5 -10°C). The ratio of regenerated resin and milk was adjusted according to the level of calcium removal that was required.

The milk/resin mixtures were gently stirred until the pH of the milk was stable (about one hour). The level of calcium in the milk was determined by back titration forming a complex with EDTA and Patton-Reeder indicator.

The ion exchange resin was removed by straining the mixture through a cheese cloth. The pH of the milk was adjusted back to 6.7 with 1M HCl prior to yoghurt making.

### Amberlite SR1L-Rohm&Haas Ion Exchange Resin Cleaning and Regeneration

The resin was cleaned by passing four bed volumes of 1% NaOH solution through it, followed by flushing with at least four bed volumes of RO water until the conductivity was less than 50µS.

The resin was regenerated between runs by passing four bed volumes of 2M NaCl through it, followed by flushing with at least two bed volumes of RO water until the conductivity was less than 50µS..

The IX treatments resulted in:
- A calcium depleted fresh milk sample was prepared where 17% of the initial calcium was removed (measured by ICP)
- A calcium depleted fresh milk sample was prepared where 75% of the initial calcium was removed (measured by ICP).

### Functional skim milk powders

Functional skim milk powders depleted in calcium were prepared using the procedure given in Example 2 of WO01/41579. Details and slight modifications of the procedure are noted below.

1000 L of skim milk was adjusted to a pH of 5.8 using dilute citric acid (e.g., 3.3%). 100 L of the cation-exchange resin (IMAC HP111E, Rohm & Haas, bearing the sulphonate group in potassium form) was filled in a stainless steel vessel of about 40 cm diameter and a height of 100 cm or a total volume of 140 L. One hundred litres of resin formed a bed with a depth of 80 cm. The skim was then passed through the resin bed at 4 bed volumes per hour. The resulting skim milk was evaporated and spray dried to produce calcium depleted skim milk powder. Two different batches (#1761 and #2108) with compositions of (30.7% protein, 0.7% fat, 59.8% lactose, 8.3% ash, 3.8% moisture and 0.03% calcium), and (35.9% protein, 0.8% fat, 51.4% lactose, 9.4% ash, 3.8% moisture and 0.19% calcium) respectively, were made.

Fresh 40% fat cream (Anchor), Fonterra Brands (NZ) Ltd, Auckland.

Trim milk (Anchor Trim Milk), Fonterra Brands (NZ) Ltd, Auckland.

Gelatine 240 Bloom, Gelita AG, Eberbach, Germany.

Starch Novation 2300, National Starch Food Innovation.

### Yoghurt Testing

Set, stirred and drinking yoghurts and Petit Suisse were evaluated 7 days after manufacture.

The resistance of the gel to penetration was measured using Universal TA-XT2 texture analyser (Universal TA-XT2 Texture Analyser with a real time graphics and data acquisition software package (XTRA Dimension) from Stable Micro Systems, Godalming, United Kingdom) using 13 mm diameter probe that was driven into the sample (at 5°C) at 1 mm/s for a distance of 20 mm and withdrawn at the same rate. The response was measured as the area under the force versus displacement curve to give the gel penetration effort (work expended during sample deformation, g x mm).

The apparent viscosity of stirred and drinking yoghurts and Petit Suisse was measured at a shear rate of 50s⁻¹ at 10°C using a Haake VT500 viscometer (Haake Mess-Technik, GmbH., Karlsruhe, Germany).

The drained syneresis of stirred yoghurts and Petit Suisse was assessed by placing a sample of approximately 38 g of product at 5°C on a 150# stainless steel gauze. The material that drained through the mesh was collected over a period of 2 h at 5°C (yoghurt) or 2 h at 32°C (Petit Suisse) and weighed. The percentage syneresis was the ratio of drained weight/original sample weight × 100.

### Experiment 1 Examination of the effect of partially soluble calcium additions to calcium depleted yoghurt milk

### Experimental Plan/Variables

### Design

| Final calcium level | 1200 mg/kg (equivalent to the calcium level in untreated skim milk control) |
|---|---|
| Protein level | 3.4% w/w (TN × 6.38) |
| Total solids | 10.2% w/w |

The formulations are summarised in Table 1.

**Table 1 Formulations used in initial comparison (quantities [g])**

| Run | SMP Control | IX Control | IX + ALAMIN™ | IX + TCP |
|---|---|---|---|---|
| Skim milk powder (SMP) | 661 | 494 | 494 | 494 |
| FSMP #1761 | 0 | 182 | 182 | 182 |
| Lactose | 28 | 12.4 | 5.9 | 7.2 |
| ALAMIN™ 997 (Fine) | 0 | 0 | 6.8 | 0 |
| TCP | 0 | 0 | 0 | 5.2 |
| MY800 (Danisco) | 0.1 | 0.1 | 0.1 | 0.1 |
| Water | 5810.9 | 5811.5 | 5811.2 | 5811.5 |
| Total | 6500 | 6500 | 6500 | 6500 |

### Procedure

The gross compositions of the yoghurt samples are summarised in Tables 2&3.

### Evaluation of Texture

Yoghurts were tested at 7 and 21 days after manufacture.

### Results

Table 2 gives a summary of the properties of the samples yoghurts. IX = Functional SMP.

**Table 2 Summary for stirred yoghurt samples**

| | Protein:Lactose (% : %) | Solids (%) | pH (7 day) | Viscosity (mPa×s) (7 day) | Syneresis (%) (7 day) | Calcium (ICP) (mg/kg) | Estimate for uniform dispersion (mg/kg) |
|---|---|---|---|---|---|---|---|
| SMP control | 3.5 : 5.93 | 10.38 | 4.37 | 420 | 44 | 1260 | 1260 |
| Replicate | 3.5:5.93 | 10.38 | 4.33 | 370 | 41 | | |
| IX control | 3.41 : 5.97 | 10.17 | 4.38 | 520 | 40 | 945 | 950 |
| Replicate | 3.41: 5.97 | 10.17 | 4.39 | 510 | 39 | | |
| IX + ALAMIN™ | 3.45 : 5.88 | 10.08 | 4.40 | 580 | 39 | 1260 | 1260 |
| Replicate | 3.45:5.88 | 10.08 | 4.44 | 520 | 39 | | |
| IX + TCP | 3.36 : 5.90 | 10.14 | 4.43 | 530 | 39 | 1100 | 1260 |
| Replicate | 3.36:5.90 | 10.14 | 4.46 | 490 | 40 | | |

**Table 3 Summary for set yoghurt samples**

| | Protein (%) | Solids (%) | pH (7 day) | Fracture effort (g×mm) (7 day) | Calcium (ICP) (mg/kg) | Estimate for uniform dispersion (mg/kg) |
|---|---|---|---|---|---|---|
| SMP control | 3.34 | 10.33 | 4.35 | 390 | 1260 | 1260 |
| Replicate | | | 4.27 | 390 | 1280 | |
| IX control | 3.41 | 10.22 | 4.36 | 480 | 945 | 950 |
| Replicate | | | 4.3 | 460 | 952 | |
| IX+ALAMIN™ | 3.46 | 10.29 | 4.44 | 530 | 1260 | 1260 |
| Replicate | | | 4.41 | 510 | 1310 | |
| IX + TCP | 3.46 | 10.21 | 4.45 | 490 | 1100 | 1260 |
| Replicate | | | 4.42 | 500 | 1380 | |

### Drained Syneresis

Addition of calcium did not detrimentally affect drained syneresis. Table 2 shows that there was less syneresis compared with the controls.

### Calcium Addition

The measured calcium results (ICP - measured by inductively coupled plasma technique) in Table 3 shows that the partially soluble added calcium concentrations agreed very closely with the overall inferred calcium concentrations from the formulated ingredients if assumed to be dispersed uniformly in the product. The amounts of fine calcium added apparently remain dispersed in the milk sufficiently for the yoghurt gel to form (set) or dissolve as the pH decreases with the production of acid by the culture.

### Texture

### Stirred Yoghurt

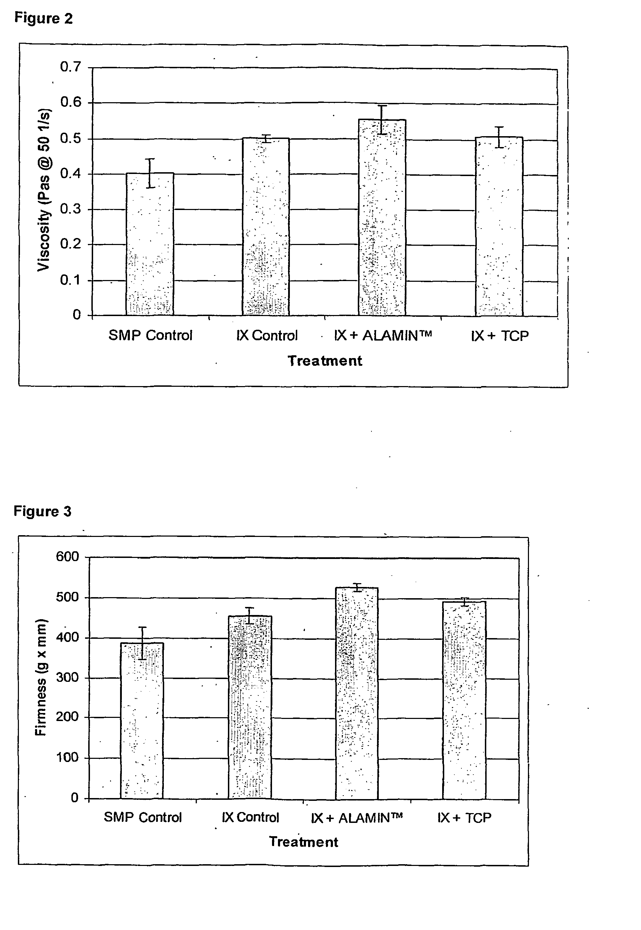

Addition of partially soluble calcium did not have a negative effect on yoghurt viscosity as shown in Figure 2 (data from Table 2).

Addition of partially soluble calcium in the form of fine ALAMIN™ had a positive effect on yoghurt viscosity. Irrespective of the final state of the added calcium, it did not impair the properties of the yoghurt.

### Set yoghurt

Surprisingly, the addition of the partially soluble calcium salt tended to increase the firmness of set yoghurt compared with the controls as shown in Figure 3 (data from Table 3). Fine ALAMIN™ had a greater effect on set yoghurt texture than TCP.

### Sensory

Yoghurts made with FSMP and FSMP fortified with either ALAMIN™ or TCP were perceived to have a similar visual viscosity and mouthfeel. The results for "Smoothness" varied between trials. All yoghurts in the first trial were perceived as having a similar smoothness. There was no detection of grittiness with the samples containing the added partially soluble sources of calcium.

Calcium in the form of finely particulate ALAMIN™ or TCP can be added to calcium-depleted yoghurt milks to restore natural calcium levels without impairing yoghurt textural quality.

### Experiment 2 Addition of soluble calcium (CaCl₂) to calcium depleted yoghurt milk

In this experiment, the effect of the addition of a fully soluble calcium salt on yoghurt properties was examined. The same SMP and FSMP control samples of Table 1 were prepared (in triplicate). In addition, two further FSMP samples (single batches) were prepared in which CaCl₂ was either added (and dissolved) prior to the heat treatment of the yoghurt milk or following the heat treatment. The culture was added post the heat treatment (and cooled) in the usual way. The formulations used are summarised in Tables 4&5.

**Table 4 Formulation of samples (% w/w)**

| | SMP control | FSMP control | FSMP + CaCl₂ before heat | FSMP + CaCl₂ after heat |
|---|---|---|---|---|
| FSMP #1761 | 0.0 | 2.8 | 2.8 | 2.8 |
| SMP | 10.17 | 7.60 | 7.60 | 7.60 |
| Lactose | 0.43 | 0.19 | 0 | 0 |
| Calcium chloride | 0 | 0 | 0.11 | 0.11 |
| Culture: MY800 | 0.002 | 0.002 | 0.002 | 0.002 |
| Water | 89.82 | 89.60 | 89.49 | 89.49 |
| Sum | 100 | 100 | 100 | 100 |

**Table 5 Formulation of samples - continued (% w/w)**

| | FSMP + ALAMIN™ | FSMP + TCP |
|---|---|---|
| FSMP #1761 | 2.8 | 2.8 |
| SMP | 7.6 | 7.6 |
| Lactose | 0.09 | 0.11 |
| ALAMIN™ | 0.105 | 0 |
| TCP | 0 | 0.08 |
| Culture: MY800 | 0.002 | 0.002 |
| Water | 89.4 | 89.41 |
| Sum | 100 | 100 |

### Results

The texture, viscosity and syneresis results are summarised in Table 6.

**Table 6 Summary of sample properties**

| | Stirred Viscosity (mPa×s @ 50 1/s) | | Set Firmness (g×mm) | | Stirred Syneresis (%) | |
|---|---|---|---|---|---|---|
| Evaluation at day | 7 | 28 | 7 | 28 | 7 | 28 |
| SMP control | 369 | 406 | 392 | 415 | 41 | 38 |
| FSMP* control | 506 | 518 | 445 | 470 | 39 | 36 |
| FSMP* CaCl₂ before heat | 347 | NA | 351 | NA | 47 | NA |
| FSMP* CaCl₂ after heat | 289 | NA | 338 | NA | 46 | NA |
| FSMP* + ALAMIN™ | 524 | 531 | 508 | 538 | 39 | 36 |
| FSMP* + TCP | 487 | 541 | 497 | 514 | 40 | 36 |

| | | | | | | |
|---|---|---|---|---|---|---|
| * FSMP is denoted IX in Figure 4 NA - not analysed | | | | | | |

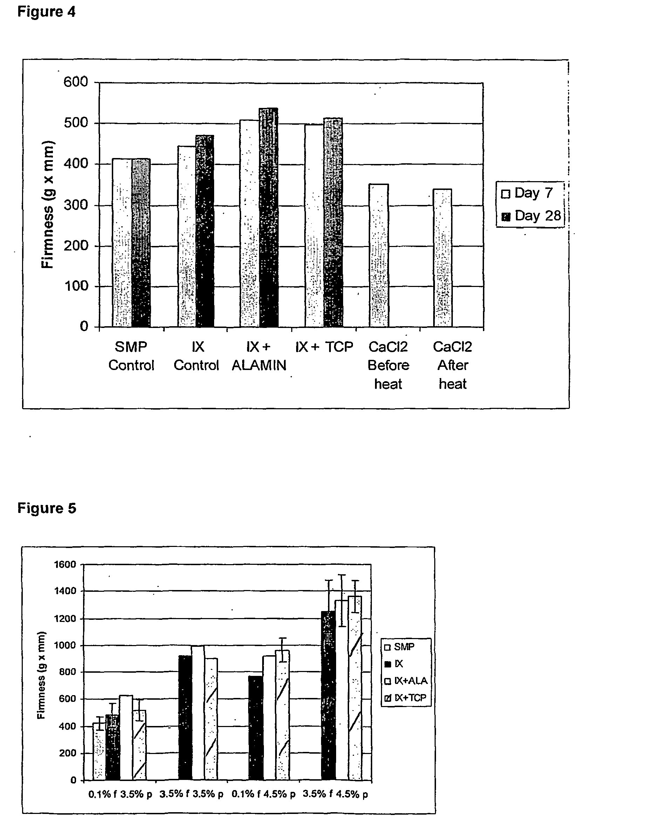

The texture results are shown in Figure 4 (data from Table 6).

The addition of a fully soluble calcium salt (CaCl₂) to the yoghurt formulation resulted in no improvement to the texture relative to the controls (SMP and FSMP Control). This is in marked contrast to the surprising increase in texture when a partially soluble source of calcium was added to the decalcified yoghurt formulation (comparison of FSMP + ALAMIN™ and FSMP + TCP, with FSMP Control).

Trials adding partially and fully soluble calcium ingredients back to the otherwise calcium depleted yoghurt milks showed -
- Partially soluble calcium did not have an adverse effect on texture. Surprisingly, the texture gains from the functional decalcified ingredients were not lost, but can be enhanced.
- A soluble calcium salt such as CaCl₂ did not contribute to texture.
- The nutritional quality of yoghurt prepared using decalcified ingredients can be restored without loss of the texture when using calcium depleted yoghurt milk.

### Experiment 3 Comparison of partially soluble calcium additions to yoghurts with and without fat

**Table 7 Formulations (% w/w)**

| Sample No. | SMP (%) | FSMP #2108 (%) | AMF (%) | ALAMIN™ (%) | TCP (%) |
|---|---|---|---|---|---|
| 1 | 9.7 | 3.5 | | | 0.11 |
| 2 | 9.7 | 3.5 | | 0.14 | |
| 3 | 7.6 | 2.65 | 3.45 | 0.10 | |
| 4 | 7.6 | 2.7 | | | |
| 5 | 7.6 | 2.7 | | | 0.08 |
| 6 | 9.7 | 3.5 | 3.45 | | 0.11 |
| 7 | 9.7 | 3.5 | 3.45 | 0.14 | |
| 8 control | 10.5 | | | | |
| 9 | 9.7 | 3.5 | | | |
| 10 | 7.6 | 2.7 | 3.45 | | 0.08 |
| 11 | 9.7 | 3.5 | 3.45 | | |
| 12 | 7.6 | 2.7 | 3.45 | | 0.08 |
| 13 | 7.6 | 2.7 | | 0.1 | |

The whole design was repeated twice. The 4.5% protein, 3.5% fat runs were repeated a third time on another day.

**Table 8 Composition (% w/w)**

| Sample No. | Milk Protein (%) | Fat (%) | Total solids (%) | Calcium (calc) (mg/100g) | Calcium (actual set) (mg/100g) | Calcium (actual stirred) (mg/100g) |
|---|---|---|---|---|---|---|
| 1 | 4.5 | 0.1 | 12.6 | 170 | 180 | 150 |
| 2 | 4.5 | 0.1 | 12.6 | 170 | 210 | 140 |
| 3 | 3.5 | 3.5 | 13.2 | 130 | 150 | 110 |
| 4 | 3.5 | 0.1 | 9.8 | 100 | 100 | 100 |
| 5 | 3.5 | 0.1 | 9.8 | 130 | 130 | 110 |
| 6 | 4.5 | 3.5 | 16.1 | 170 | 180 | 150 |
| 7 | 4.5 | 3.5 | 16.1 | 170 | 250 | 150 |
| 8 Control | 3.5 | 0.1 | 9.9 | 130 | 130 | 130 |
| 9 | 4.5 | 0.1 | 12.5 | 130 | 130 | 130 |
| 10 | 3.5 | 3.5 | 13.2 | 130 | 130 | 120 |
| 11 | 4.5 | 3.5 | 16.0 | 130 | 130 | 130 |
| 12 | 3.5 | 3.5 | 13.3 | 100 | 100 | 100 |
| 13 | 3.5 | 0.1 | 9.8 | 130 | 140 | 120 |

### Results

Table 9 summarises the averaged results.

**Table 9 Texture of yoghurt samples with and without fat**

| Run Nos. | Milk Protein (%) | Fat (%) | Calcium source | Set Yoghurt | | Stirred Yoghurt | | |
|---|---|---|---|---|---|---|---|---|
| | | | | pH | Firmness (g×mm) | pH | Apparent Viscosity (mPa×s @ 50 1/s) | Syneresis (%) |
| 1 | 4.5 | 0.1 | FSMP +TCP | 4.4 | 960 | 4.4 | 730 | 28 |
| 2 | 4.5 | 0.1 | FSMP+LA | 4.5 | 920 | 4.4 | 640 | 28 |
| 3 | 3.5 | 3.5 | FSMP+ALA | 4.4 | 990 | 4.3 | 950 | 24 |
| 4 | 3.5 | 0.1 | FSMP | 4.3 | 480 | 4.3 | 490 | 40 |
| 5 | 3.5 | 0.1 | FSMP +TCP | 4.3 | 514 | 4.4 | 490 | 40 |
| 6 | 4.5 | 3.5 | FSMP +TCP | 4.4 | 1360 | 4.4 | 1170 | 17 |
| 7 | 4.5 | 3.5 | FSMP +ALA | 4.4 | 1330 | 4.4 | 1280 | 18 |
| 8 | 3.5 | 0.1 | Control | 4.3 | 420 | 4.3 | 380 | 41 |
| 9 | 4.5 | 0.1 | FSMP | 4.4 | 770 | 4.4 | 830 | 27 |
| 10 | 3.5 | 3.5 | FSMP +TCP | 4.4 | 900 | 4.4 | 1070 | 22 |
| 11 | 4.5 | 3.5 | FSMP | 4.4 | 1250 | 4.4 | 1360 | 18 |
| 12 | 3.5 | 3.5 | FSMP | 4.3 | 920 | 4.4 | 1000 | 22 |
| 13 | 3.5 | 0.1 | FSMP | 4.4 | 630 | 4.4 | 490 | 39 |

| | | | | | | | | |
|---|---|---|---|---|---|---|---|---|
| Note in Figures 5 & 6 FSMP is denoted as IX. | | | | | | | | |

Figure 5 shows the firmness results from Table 9.

### Texture

Figure 5 shows that the firmness of set yoghurts increased as protein and fat levels increased. At 3.5% protein and 0.1% fat yoghurt made from calcium-depleted milk was approximately 15% firmer than the undepleted control.

Adding a partially soluble calcium source to the calcium-depleted milk did not negatively affect set yoghurt firmness, compared with the calcium-depleted yoghurt at the protein and fat levels tested. Overall, there is a trend for the addition of calcium to increase firmness.

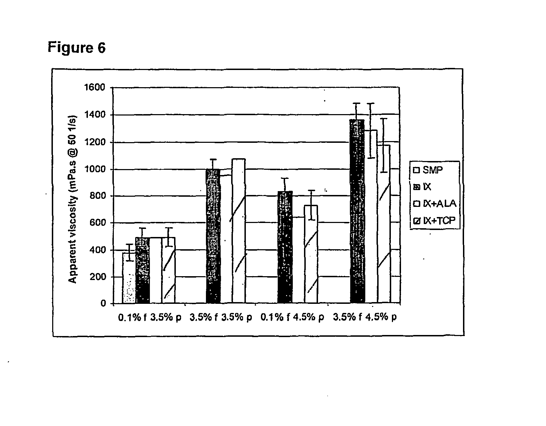

Figure 6 shows that the viscosity of the stirred yoghurts increased as protein and fat levels increased. At 3.5% protein and 0.1% fat yoghurt made from calcium-depleted milk was approximately 25% more viscous than the undepleted control.

Adding a partially soluble calcium source to the calcium-depleted milk maintained the viscosity of the stirred yoghurt, compared with the calcium-depleted yoghurt at the protein and fat levels tested.

### Drained Syneresis

Drained syneresis decreased as protein and fat levels increased. The addition of partially soluble calcium to calcium-depleted milks had no effect on the drained syneresis.

### Experiment 4 Effect of partially soluble calcium additions to yoghurt milks containing gelatine and starch

The experiment was repeated twice.

**Table 10 Formulations (% w/w)**

| Sample No. | SMP (%) | FSMP #2108 (%) | Gelatine (%) | Starch (%) | ALAMIN™ (%) | TCP (%) | Lactose (%) |
|---|---|---|---|---|---|---|---|
| 1 Control | 10.48 | | | | | | |
| 2 control | 10.48 | | 0.25 | 0.80 | | | |
| 3 | 7.60 | 2.70 | 0.25 | 0.80 | | | 0.12 |
| 4 | 7.70 | 2.60 | 0.25 | 0.80 | 0.1 | | |
| 5 | 7.7 | 2.60 | 0.25 | 0.80 | | 0.08 | |
| 6 | 13.48 | | 0.25 | 0.80 | | | |
| 7 | 9.73 | 3.50 | 0.25 | 0.80 | 0.14 | | 0.17 |
| 8 | 9.73 | 3.50 | 0.25 | 0.80 | | 0.11 | |
| 9 Control | 9.73 | 3.50 | 0.25 | 0.80 | | | |

**Table 11 Composition (% w/w)**

| Sample No. | Milk Protein (%) | Fat (%) | Total solids (%) | Calcium (calc) (mg/100g) | Calcium (stirred actual) (mg/100g) |
|---|---|---|---|---|---|
| 1 Control | 3.5 | 0.1 | 9.9 | 130 | 130 |
| 2 Control | 3.5 | 0.1 | 10.8 | 130 | 130 |
| 3 | 3.5 | 0.1 | 10.8 | 100 | 100 |
| 4 | 3.5 | 0.1 | 10.8 | 130 | 120 |
| 5 | 3.5 | 0.1 | 10.8 | 130 | 120 |
| 6 | 4.5 | 0.1 | 13.6 | 170 | 170 |
| 7 | 4.5 | 0.1 | 13.6 | 130 | 120 |
| 8 | 4.5 | 0.1 | 13.6 | 170 | 160 |
| 9 Control | 4.5 | 0.1 | 13.6 | 170 | 160 |

### Results

Table 12 summarises the averaged results for firmness and viscosity.

**Table 12 Summary of textures obtained with yoghurts containing gelatine and starch**

| Sample No. | | Set Yoghurt | | Stirred Yoghurt | | |
|---|---|---|---|---|---|---|
| | Milk Protein (%) | pH | Firmness (g×mm) | pH | Apparent Viscosity (mPa×s @ 50 1/s) | Syneresis (%) |
| 1 Control | 3.5 | 4.3 | 430 | 4.3 | 390 | 40 |
| 2 Control | 3.5 | 4.3 | 448 | 4.3 | 770 | 7 |
| 3 | 3.5 | 4.5 | 537 | 4.3 | 860 | 7 |
| 4 | 3.5 | 4.4 | 523 | 4.4 | 860 | 8 |
| 5 | 3.5 | 4.4 | 529 | 4.4 | 870 | 7 |
| 6 | 4.5 | 4.4 | 760 | 4.4 | 1110 | 5 |
| 7 | 4.5 | 4.4 | 916 | 4.4 | 1270 | 5 |
| 8 | 4.5 | 4.4 | 940 | 4.4 | 1310 | 5 |
| 9 Control | 4.5 | 4.4 | 947 | 4.4 | 1300 | 4 |

### Texture

Table 12 firmness results show that the addition of:
- Gelatine and starch does not affect the texture benefits conferred by the addition of partially soluble calcium on the set yoghurt.
- Benefits of partially soluble calcium additions were obtained at both protein concentrations.

Table 12 firmness results show that the addition of
- Gelatine and starch does not affect the texture benefits conferred by the addition of partially soluble calcium on the stirred yoghurt.
- Benefits of partially soluble calcium additions were obtained at both protein concentrations.

### Drained Syneresis

Table 12 shows that the addition of partially soluble calcium to calcium-depleted milks containing gelatine and starch had no effect on drained syneresis.

### Informal Sensory

An informal sensory panel found that for both 3.5 and 4.5% protein yoghurts, those made from calcium-depleted milk with added gelatine, starch and partially soluble calcium (ether ALAMIN™ or TCP) had higher in-mouth viscosity than the controls. The samples with partially soluble calcium added were not gritty in the mouth.

### Experiment 5 Effect of addition of partially soluble calcium to calcium depleted milks with altered casein to whey protein ratios

The experiment was repeated twice.

**Table 13 Formulations (% w/w)**

| Sample No. | SMP (%) | FSMP #2108 (%) | WPC 80 (%) | ALAMIN™ (%) | Lactose (%) |
|---|---|---|---|---|---|
| 1 | 13.48 | | | | |
| 2 | 9.73 | 3.50 | | | 0.17 |
| 3 | 9.7 | 3.5 | | 0.14 | 0.06 |
| 4 | 8.43 | 3.10 | 0.72 | | 1.1 |
| 5 | 8.40 | 3.10 | 0.72 | 0.12 | 1.0 |
| 6 | 6.9 | 3.0 | 1.4 | | 2 |
| 7 | 6.9 | 3.0 | 1.4 | 0.11 | 1.9 |
| 8 | 3.7 | 2.4 | 3.0 | | 4.0 |
| 9 | 3.7 | 2.4 | 3.0 | 0.2 | 3.9 |

**Table 14 Composition (% w/w)**

| Run | Milk Protein % | Fat (%) | Total solids (%) | Casein: whey protein ratio | Calcium (calc) (mg/100g) | Calcium (set actual) (mg/100g) | Calcium (stirred actual) (mg/100g) |
|---|---|---|---|---|---|---|---|
| 1 | 4.5 | 0.1 | 12.7 | 80:20 | 170 | 170 | 170 |
| 2 | 4.5 | 0.1 | 12.7 | 80:20 | 130 | 120 | 120 |
| 3 | 4.5 | 0.1 | 12.7 | 80:20 | 170 | 180 | 140 |
| 4 | 4.5 | 0.1 | 12.7 | 70:30 | 110 | 110 | 110 |
| 5 | 4.5 | 0.1 | 12.7 | 70:30 | 150 | 140 | 130 |
| 6 | 4.5 | 0.1 | 12.7 | 60:40 | 100 | 100 | 100 |
| 7 | 4.5 | 0.1 | 12.7 | 60:40 | 130 | 120 | 110 |
| 8 | 4.5 | 0.1 | 12.7 | 40:60 | 60 | 60 | 60 |
| 9 | 4.5 | 0.1 | 12.7 | 40:60 | 120 | 150 | 100 |

### Results

Table 15 summarises the averaged results for firmness and viscosity.

**Table 15 Summary of yoghurt properties with altered protein compositions**

| Sample No. | | Set Yoghurt | | Stirred Yoghurt | | |
|---|---|---|---|---|---|---|
| | Milk Protein (%) | pH | Firmness (g×mm) | pH | Apparent Viscosity (mPa×s @ 50 1/s) | Syneresis (%) |
| 1 | 4.5 | 4.4 | 770 | 4.4 | 630 | 29 |
| 2 | 4.5 | 4.4 | 900 | 4.4 | 780 | 26 |
| 3 | 4.5 | 4.5 | 1070 | 4.5 | 840 | 27 |
| 4 | 4.5 | 4.4 | 970 | 4.4 | 730 | 24 |
| 5 | 4.5 | 4.5 | 1080 | 4.4 | 920 | 24 |
| 6 | 4.5 | 4:4 | 990 | 4.4 | 810 | 22 |
| 7 | 4.5 | 4.4 | 1150 | 4.4 | 960 | 21 |
| 8 | 4.5 | 4.4 | 2200 | 4.4 | 1560 | 12 |
| 9 | 4.5 | 4.4 | 2070 | 4.4 | 1440 | 14 |

### Texture

Table 15 shows that the addition of partially soluble calcium (ALAMIN™) to the 80:20 - 60:40 casein:whey protein calcium-depleted milks did not have a negative effect on stirred yoghurt viscosity. Surprisingly, the addition of calcium had a positive effect on stirred yoghurt viscosity, which increased significantly.

### Drained Syneresis

Drained syneresis decreased as the proportion of whey protein in the milk increased. The addition of calcium had no effect on drained syneresis.

### Experiment 6 Addition of partially soluble calcium salts to yoghurt milks fortified with sodium caseinate

**Table 16 Formulations (% w/w)**

| Sample No. | SMP (%) | Na Cas (%) | ALAMIN™ (%) | TCP (%) | WPC 34 (%) | Lactose (%) |
|---|---|---|---|---|---|---|
| 1 | 10.5 | | | | | |
| 2 | 7.5 | 0.87 | | | 0.55 | 1.55 |
| 3 | 7.5 | 0.87 | 0.11 | | 0.55 | 1.44 |
| 4 | 7.5 | 0.87 | | 0.09 | 0.55 | 1.46 |

In order to keep the casein:whey protein ratio constant, whey protein was added to the formulations. WPC 34 was used to add the extra whey protein and some of the additional lactose required to balance the formulation. The shortfall in total solids was made up by adding powdered lactose.

**Table 17 Composition (% w/w)**

| Sample No. | Milk Protein (%) | Fat (%) | Total solids (%) | Casein: whey protein ratio | Calcium (calc) (mg/100g) | Calcium (set actual) (mg/100g) | Calcium (stirred actual) (mg/100g) |
|---|---|---|---|---|---|---|---|
| 1 | 3.5 | 0.1 | 9.9 | 80:20 | 130 | 130 | 130 |
| 2 | 3.5 | 0.1 | 10.0 | 80:20 | 98 | 100 | 100 |
| 3 | 3.5 | 0.1 | 10.0 | 80:20 | 130 | 150 | 110 |
| 4 | 3.5 | 0.1 | 10.0 | 80:20 | 130 | 130 | 120 |

The results for firmness and viscosity are summarised in Table 18.

**Table 18 Summary of results of yoghurt samples prepared using caseinate**

| Sample No. | | Set Yoghurt | | Stirred Yoghurt | | |
|---|---|---|---|---|---|---|
| | Milk Protein (%) | pH | Firmness (g×mm) | pH | Apparent Viscosity (mPa×s @ 50 1/s) | Syneresis (%) |
| 1 | 3.5 | 4.3 | 470 | 4.3 | 420 | 39 |
| 2 | 3.5 | 4.3 | 570 | 4.3 | 490 | 37 |
| 3 | 3.5 | 4.5 | 560 | 4.5 | 550 | 35 |
| 4 | 3.5 | 4.5 | 560 | 4.5 | 510 | 37 |

### Texture

The addition of partially soluble calcium did not diminish the set yoghurt firmness.

The addition of partially soluble calcium did not diminish the stirred yoghurt viscosity.

### Sensory

An informal sensory panel found all the yoghurts made with sodium caseinate and partially soluble calcium had a perceptibly higher in-mouth viscosity, compared with the control yoghurt. The yoghurt samples were not gritty in the mouth.

### Drained Syneresis

Drained syneresis was not affected by either the use of sodium caseinate or the addition of partially soluble calcium.

### Experiment 7 Addition of partially soluble calcium to calcium depleted milks used to prepare drinking yoghurt [DY]

### Formulations

**Table 19 Drinking Yoghurt formulations (% w/w)**

| Sample No. | SMP (%) | Cream (%) | FSMP #2108 (%) | ALAMIN™ (%) | Lactose (%) |
|---|---|---|---|---|---|
| 1 DY control | 9.6 | 2.4 | | | 1.4 |
| 2 DY control | 7.2 | 2.4 | 2.1 | | 0.6 |
| 3 DY | 7.2 | 2.4 | 2.1 | 0.1 | 0.6 |

### Composition

**Table 20 Drinking Yoghurt compositions (% w/w)**

| Sample No. | Milk Protein (%) | Fat (%) | Total solids (%) | Calcium (calc) (mg/100g) | Calcium (actual) (mg/100g) |
|---|---|---|---|---|---|
| 1 DY | 3.3 | 1.0 | 10.4 | 120 | 120 |
| 2 DY | 3.2 | 1.0 | 9.4 | 90 | 100 |
| 3 DY | 3.2 | 1.0 | 9.5 | 120 | 100 |

**Table 21 Summary of texture results for drinking yoghurt**

| Sample No. | Actual Milk Protein (%) | Actual Total solids (%) | pH | Apparent Viscosity (mPa×s @ 50 1/s) | Syneresis (%) |
|---|---|---|---|---|---|
| 1 DY | 3.5 | 11.2 | 4.6 | 220 | n/a |
| 2 DY | 3.3 | 10.6 | 4.6 | 200 | n/a |
| 3 DY | 3.6 | 10.8 | 4.6 | 250 | n/a |

### Texture

Table 21 shows that there was an improvement in viscosity of the drinking yoghurt with added partially soluble calcium. An informal sensory panel perceived the calcium-depleted drinking yoghurt with added calcium to have a higher in-mouth viscosity.

### Drained syneresis

Drained syneresis was not carried out on the drinking yoghurts as they were liquids.

### Experiment 8 Addition of partially soluble calcium to directly calcium depleted fresh milk

### Calcium depleted milks

Samplers of low (17%) and high (75%) calcium depleted fresh milk were prepared using the method detailed above.

**Table 22 Formulations using fresh milk (% w/w)**

| Sample No. | Trim milk (%) | 75% calcium depleted milk (%) | 17% calcium depleted milk (%) | (%) ALAMIN™ (%) | TCP (%) |
|---|---|---|---|---|---|
| 1 Control | 100.00 | | | | |
| 2 | 65.00 | 35.00 | | | |
| 3 | 64.92 | 35.10 | | 0.08 | |
| 4 | 64.90 | 35.00 | | | 0.10 |
| 5 | | | 100.00 | | |
| 6 | | | 99.92 | 0.08 | |
| 7 | | | 99.90 | | 0.10 |

**Table 23 Composition (% w/w)**

| Sample No. | Milk Protein (%) | Fat (%) | Total solids (%) | Calcium (calc) (mg/100g) | Calcium (actual) (mg/100g) |
|---|---|---|---|---|---|
| 1 | 3.9 | 0.5 | 9.8 | 120 | 130 |
| 2 | 3.9 | 0.5 | 9.8 | 90 | 100 |
| 3 | 3.9 | 0.5 | 9.9 | 120 | 110 |
| 4 | 3.9 | 0.5 | 9.9 | 120 | 110 |
| 5 | 3.9 | 0.5 | 9.8 | 90 | 110 |
| 6 | 3.9 | 0.5 | 9.9 | 120 | 130 |
| 7 | 3.9 | 0.5 | 9.9 | 120 | 120 |

### Results

**Table 24 Summary of results of yoghurt prepared using fresh milk**

| Sample No. | Actual Milk Protein (%) | Actual Total solids (%) | pH | Apparent Viscosity (mPa×s @ 50 1/s) | Syneresis (%) |
|---|---|---|---|---|---|
| 1 | 3.8 | 9.6 | 4.3 | 360 | 41 |
| 2 | 3.7 | 9.4 | 4.4 | 570 | 38 |
| 3 | 3.8 | 9.4 | 4.4 | 630 | 39 |
| 4 | 3.7 | 9.4 | 4.4 | 570 | 39 |
| 5 | 3.7 | 9.2 | 4.4 | 540 | 40 |
| 6 | 3.7 | 9.5 | 4.4 | 610 | 37 |
| 7 | 3.8 | 9.3 | 4.5 | 600 | 39 |

### Texture

Table 24 shows the viscosities of the stirred yoghurt increased about 10% with the addition of the partially soluble calcium.

Informal sensory did not differentiate between the yoghurts.

In this specification, where reference has been made to external sources of information, including patent specifications and other documents, this is generally for the purpose of providing a context for discussing the features of the present invention. Unless stated otherwise, reference to such sources of information is not to be construed, in any jurisdiction, as an admission that such sources of information are prior art or form part of the common general knowledge in the art.

The above examples are illustrations of the practice of the invention. It will be appreciated by those skilled in the art that the invention can be carried out with numerous modifications and variations. For example, the calcium-depleted ingredients used can show variations in protein concentration and calcium content. The method of calcium depletion can be varied. The percentage calcium depletion and drying procedures can also be varied. Likewise, the proportions of components, the acidification method, and incubation conditions may be varied.

## Claims

1. A method for preparing a yoghurt or a yoghurt drink, comprising:
(a) providing a casein source that has been treated to remove a proportion of its divalent cations including at least a proportion of its calcium ions;
(b) mixing the calcium-depleted casein source with one or more other ingredients to form a yoghurt milk, if required;
(c) dispersing a substantially insoluble calcium source in the yoghurt milk;
(d) heat treating the yoghurt milk;
(e) acidifying the mixture to a pH that causes gelling of the yoghurt milk,
wherein step (c) is carried out at any time before gelling for set yoghurt and stirred yoghurt and the final packaging of drinking yoghurts.

2. A method as claimed in claim 1 wherein the casein source that has been treated to remove a proportion of its divalent ions is the yoghurt milk.

3. A method as claimed in claim 2 wherein the yoghurt milk is selected from the group consisting of liquid calcium-depleted milk, liquid calcium-depleted skim milk and liquid calcium-depleted milk protein concentrates.

4. A method as claimed in claim 1 wherein the yoghurt milk is prepared by adding other ingredients to a liquid calcium-depleted source, preferably including fat and whey protein.

5. A method as claimed in claim 4 wherein the calcium-depleted casein source is added to a liquid dairy composition comprising casein so as to reduce the calcium to casein ratio.

6. A method as claimed in claim 4 wherein the yoghurt milk is prepared from a mixture of ingredients chosen from a calcium-depleted casein source liquid concentrate, a powdered calcium-depleted casein source, a powdered casein source, water, fat and whey proteins.

7. A method as claimed in any one of claims 1 to 6 wherein the substantially insoluble calcium source is a calcium source having a solubility in pure water of < 5g/L, preferably < 2g/L.

8. A method as claimed in claim 4 wherein a proportion of the calcium and magnesium ions of a casein source are replaced with sodium or potassium ions.

9. A method of any one of claims 1 to 8 wherein the calcium-depleted casein source is a calcium-depleted milk, calcium-depleted skim milk, calcium-depleted milk protein concentrate, or a sodium caseinate.

10. A method as claimed in any one of claims 1 to 9 wherein between 10% to 50% of the calcium is removed from the yoghurt milk.

11. A method as claimed in any one of claims 1 to 10 wherein the substantially insoluble calcium source is selected from tri-calcium phosphate (TCP), calcium carbonate, limestone, dolomite, coral, shell, aragonite and bone.

12. A method of any one of claims 1 to 11 wherein the substantially insoluble calcium source is in the form of particles less than 10 micrometres in nominal diameter.

13. A method of any one of claims 1 to 12 wherein the level of calcium added is either at least 10% of the calcium in the yoghurt milk or is sufficient to bring the calcium concentration in the yoghurt milk up to the level of the corresponding yoghurt milk where the calcium-depleted casein source was not calcium-depleted.

14. A method as claimed in any one of claims 1 to 13 wherein the heat treating is carried out at 70°C to 95°C.

15. A method as claimed in any one of claims 1 to 14 wherein fermentation is carried out until the yoghurt has been formed.

## Patentansprüche

1. Verfahren zur Herstellung eines Jogurts oder Jogurtgetränks, umfassend:
(a) Bereitstellen einer Caseinquelle, welche behandelt worden ist, um einen Anteil ihrer divalenten Kationen einschließlich zumindest eines Anteils ihrer Calciumionen zu entfernen;
(b) Vermischen der calcium-abgereicherten Caseinquelle mit einer oder mehreren anderen Ingredienzien zur Herstellung einer Jogurtmilch, falls erforderlich;
(c) Verteilen einer im Wesentlichen unlöslichen Calciumquelle in der Jogurtmilch;
(d) Wärmebehandeln der Jogurtmilch;
(e) Säuern des Gemisches auf einen pH-Wert, der ein Gelieren der Jogurtmilch bewirkt,
wobei der Schritt (c) zu einer beliebigen Zeit vor dem Gelieren für stichfesten Jogurt und gerührten Jogurt und dem endgültigen Verpacken von Trinkjogurten ausgeführt wird.

2. Verfahren nach Anspruch 1, wobei die Caseiquelle, welche behandelt worden ist, um einen Anteil ihrer divalenten Ionen zu entfernen, die Jogurtmilch ist.

3. Verfahren nach Anspruch 2, wobei die Jogurtmilch aus der Gruppe ausgewählt ist, die aus flüssiger calcium-abgereicherter Milch, flüssiger calcium-abgereicherter entrahmter Milch und flüssigen calcium-abgereicherten Milchproteinkonzentraten besteht.

4. Verfahren nach Anspruch 1, wobei die Jogurtmilch durch Zugabe anderer Ingredienzien zu einer flüssigen calcium-abgereicherten Quelle, bevorzugt einschließlich Fett und Molkeprotein, hergestellt wird.

5. Verfahren nach Anspruch 4, wobei die calcium-abgereicherte Caseinquelle zu einer flüssigen Milchproduktzusammensetzung, die Casein umfasst, zugegeben wird, um das Calcium-zu-Casein-Verhältnis zu verringern.

6. Verfahren nach Anspruch 4, wobei die Jogurtmilch aus einem Gemisch von Ingredienzien hergestellt wird, die aus einem Calcium-abgereicherte-Caseinquelle-Flüssigkonzentrat, einer pulverisierten calcium-abgereicherten Caseinquelle, einer pulverisierten Caseinquelle, Wasser, Fett und Molkeproteinen ausgewählt sind.

7. Verfahren nach irgendeinem der Ansprüche 1 bis 6, wobei die im Wesentlichen unlösliche Calciumquelle eine Calciumquelle mit einer Löslichkeit in reinem Wasser von <5g/l, bevorzugt <2g/l, ist.

8. Verfahren nach Anspruch 4, wobei ein Anteil der Calcium- und Magnesiumionen einer Caseinquelle durch Natrium- oder Kaliumionen ersetzt werden.

9. Verfahren nach irgendeinem der Ansprüche 1 bis 8, wobei die calcium-abgereicherte Caseinquelle eine calcium-abgereicherte Milch, calcium-abgereicherte entrahmte Milch, calcium-abgereichertes Milchproteinkonzentrat oder ein Natriumcaseinat ist.

10. Verfahren nach irgendeinem der Ansprüche 1 bis 9, wobei zwischen 10% und 50% des Calciums aus der Jogurtmilch entfernt werden.

11. Verfahren nach irgendeinem der Ansprüche 1 bis 10, wobei die im Wesentlichen unlösliche Calciumquelle aus Tricalciumphosphat (TCP), Calciumcarbonat, Kalkstein, Dolomit, Koralle, Muschelschale, Aragonit und Knochen ausgewählt wird.

12. Verfahren nach irgendeinem der Ansprüche 1 bis 11, wobei die im Wesentlichen unlösliche Calciumquelle in Form von Teilchen vorliegt, die einen Nenndurchmesser von weniger als 10 µm haben.

13. Verfahren nach irgendeinem der Ansprüche 1 bis 12, wobei der Gehalt des zugegebenen Calciums entweder mindestens 10% des Calciums in der Jogurtmilch beträgt oder ausreichend ist, um die Calciumkonzentration in der Jogurtmilch auf den Gehalt der entsprechenden Jogurtmilch zu bringen, in der die calcium-abgereicherte Caseinquelle nicht calcium-abgereichert wurde.

14. Verfahren nach irgendeinem der Ansprüche 1 bis 13, wobei die Wärmebehandlung bei 70°C bis 95°C ausgeführt wird.

15. Verfahren nach irgendeinem der Ansprüche 1 bis 14, wobei eine Fermentation ausgeführt wird, bis sich der Jogurt gebildet hat.

## Revendications

1. Procédé de préparation d'un yaourt ou d'un yaourt à boire, comprenant les étapes suivantes :
(a) fournir une source de caséine qui a été traitée pour éliminer une proportion de ses cations divalents dont au moins une proportion de ses ions calcium ;
(b) mélanger la source de caséine appauvrie en calcium avec un ou plusieurs autres ingrédients pour former un lait de yaourt, si nécessaire ;
(c) disperser une source de calcium sensiblement insoluble dans le lait de yaourt ;
(d) appliquer un traitement thermique au lait de yaourt ;
(e) acidifier le mélange jusqu'à un pH causant la gélification du lait de yaourt, où l'étape (c) est exécutée à un moment quelconque avant la gélification pour le yaourt ferme et le yaourt brassé et le conditionnement final des yaourts à boire.

2. Procédé conforme à la revendication 1, où la source de caséine qui a été traitée pour éliminer une proportion de ses ions divalents est le lait de yaourt.

3. Procédé conforme à la revendication 2, où le lait de yaourt est sélectionné parmi un groupe consistant en du lait liquide appauvri en calcium, du lait écrémé liquide appauvri en calcium et des concentrés de protéines laitières liquides appauvries en calcium.

4. Procédé conforme à la revendication 1, où le lait de yaourt est préparé en ajoutant d'autres ingrédients à une source liquide appauvrie en calcium, contenant de préférence des graisses et des protéines laitières.

5. Procédé conforme à la revendication 4, où la source de caséine appauvrie en calcium est ajoutée à une composition laitière liquide comprenant de la caséine afin de réduire la proportion de calcium par rapport à la caséine.

6. Procédé conforme à la revendication 4, où le lait de yaourt est préparé à partir d'un mélange d'ingrédients choisis parmi un concentré liquide de source de caséine appauvrie en calcium, une source de caséine appauvrie en calcium en poudre, une source de caséine en poudre, de l'eau, des graisses et des protéines de lait.

7. Procédé conforme à une quelconque des revendications 1 à 6, où la source de calcium sensiblement insoluble est une source de calcium dotée d'une solubilité dans l'eau pure inférieure à 5 g/L, de préférence inférieure à 2 g/L.

8. Procédé conforme à la revendication 4, où une proportion d'ions calcium et magnésium d'une source de caséine est remplacée par des ions sodium ou potassium.

9. Procédé conforme à une quelconque des revendications 1 à 8, où la source de caséine appauvrie en calcium est du lait appauvri en calcium, du lait écrémé appauvri en calcium, du concentré de protéines laitières appauvries en calcium ou un caséinate de sodium.

10. Procédé conforme à une quelconque des revendications 1 à 9, où entre 10 % et 50% du calcium est éliminé du lait de yaourt.

11. Procédé conforme à une quelconque des revendications 1 à 10, où la source de calcium sensiblement insoluble est sélectionnée parmi du phosphate tricalcique (PTC), du carbonate de calcium, du calcaire, de la dolomite, du corail, de la coquille, de l'aragonite et de l'os.

12. Procédé conforme à une quelconque des revendications 1 à 11, où la source de calcium sensiblement insoluble est sous forme de particules inférieures à 10 micromètres de diamètre nominal.

13. Procédé conforme à une quelconque des revendications 1 à 12, où le niveau de calcium ajouté est soit au moins 10 % du calcium dans le lait de yaourt, soit suffisant pour mettre la concentration de calcium dans le lait de yaourt au niveau du lait de yaourt correspondant où la source de caséine appauvrie en calcium n'a pas été appauvrie en calcium.

14. Procédé conforme à une quelconque des revendications 1 à 13, où le traitement thermique est effectué de 70° C à 95° C.

15. Procédé conforme à une quelconque des revendications 1 à 14, où une fermentation est pratiquée jusqu'à ce que le yaourt soit formé.
